# FASCICULE DE BREVET EUROPEEN

(11) **EP 1 080 235 B1**
(45) Date de publication et mention de la délivrance du brevet: **24.07.2002**
(21) Numéro de dépôt: 99920758.2
(22) Date de dépôt: 23.04.1999
(51) Int. Cl.: C21B 13/10

(54) **PROCEDE DE REDUCTION D'OXYDES METALLIQUES ET DISPOSITIF POUR LA MISE EN OEUVRE DU PROCEDE**
VERFAHREN UND VORRICHTUNG ZUR REDUKTION VON EISENOXIDEN
METHOD FOR REDUCING METAL OXIDES AND DEVICE FOR IMPLEMENTING SAID METHOD

(30) Priorité: 28.04.1998 EP 98870097
(43) Date de publication de la demande: 07.03.2001
(73) Titulaire: SIDMAR N.V., B-9042 Gent (BE)
(72) Inventeur: MONTEYNE, Guido, B-9971 Lembeeke (BE)
(74) Mandataire: Kihn, Pierre Emile Joseph
(86) Numéro de dépôt international: EP9902749
(87) Numéro de publication internationale: WO9955919

(56) Documents cités:
- FR-A- 556 633
- LU-A- 60 981
- US-A- 3 770 417
- US-A- 5 567 224
- BAROZZI S: "METAL RECOVERY FROM STEEL WASTES BY THE INMETCO PROCESS" STEEL TIMES - INCORPORATING IRON & STEEL, vol. 225, no. 5, 1 mai 1997 (1997-05-01), page 191/192 XP000692297 ISSN: 0039-095X
- "THE COMET PROCESS / DRI FROM FINES AND COAL" STEEL TIMES - INCORPORATING IRON & STEEL, vol. 224, no. 11, 1 novembre 1996 (1996-11-01), page 399 XP000639991 ISSN: 0039-095X

## Description

La présente invention concerne un procédé de réduction d'oxydes métalliques, notamment d'oxydes de fer ainsi qu'un dispositif pour la mise en oeuvre du procédé.

La réduction directe d'oxydes métalliques, notamment des minerais mais également de différents oxydes métalliques à recycler s'est largement développée ces dernières années.

Le brevet US 3,770,417 divulgue un procédé et une installation comprenant un four à sole tournante pour la production simultanée de coke et de métaux métallisés. Dans le document LU-60981-A (Société Anonyme des Minerais), on décrit un procédé pour fabriquer une éponge de fer comportant l'utilisation d'un réacteur continu à sole tournante avec un déplacement de matière de la périphérie vers le centre, alimenté d'abord en charbon et ensuite, après que le charbon a été cokéfié, par du minerai de fer en « pellets » ou en morceaux préchauffés à la température de réaction. Des racloirs fixes assurent un déplacement du charbon vers le centre du four et mélangent le charbon cokéfié au minerai au fur et à mesure de la rotation de la sole tournante. Après réaction, la charge est évacuée par un puits central.

Un des désavantages de l'état de la technique est que les constituants volatils du charbon ne participent pas à la réduction des oxydes métalliques. Ce procédé ne permet d'obtenir ni une productivité élevée ni une bonne homogénéisation en température et en matière de la charge.

L'objet de la présente invention est de proposer un procédé de réduction d'oxydes métalliques utilisant de manière plus efficace les capacités réductrices des constituants volatils d'un réducteur carboné.

Conformément à l'invention, cet objectif est atteint par un procédé de réduction d'oxydes métalliques dans un four à sole tournante en forme de couronne dans lequel un réducteur carboné et des oxydes métalliques sont déposés en une bande sur une partie de ladite sole tournante et sont ensuite transportés en un mouvement substantiellement en forme hélicoïdale vers un dispositif d'évacuation, le réducteur étant préchauffé et mélangé avec les oxydes métalliques préchauffés avant qu'ils soient ou pendant qu'ils sont déposés sur la sole tournante, caractérisé en ce qu'on utilise dans une première phase de réduction les composantes volatiles du réducteur carboné (principalement le méthane et l'hydrogène) pour débuter la réduction des oxydes métalliques et en ce qu'on utilise, dans une deuxième étape de réduction, le monoxyde de carbone.

Contrairement aux procédés de l'état de la technique, dans le procédé selon l'invention, une partie des constituants volatils du réducteur carboné, en particulier l'hydrogène et le méthane, sont mis en oeuvre pour leur capacité réductive.

Le procédé selon l'invention permet d'augmenter les vitesses de réaction par un mélange des oxydes métalliques et du réducteur carboné en utilisant de manière efficace les capacités réductrices des constituants volatils du réducteur carboné par leur passage forcé à travers le mélange préchauffé qui constitue la charge du four.

Un des avantages de ce procédé réside dans le fait que les composantes volatiles c.-à-d. les gaz de distillation du réducteur carboné sont utilisés dans une première étape pour réduire les oxydes métalliques alors que dans les procédés connus, ces gaz sont brûlés et servent à chauffer les matières solides.

La réduction des oxydes métalliques se fait donc en deux étapes respectivement par au moins deux réactions chimiques différentes.

La première étape de réduction se fait à l'aide d'hydrogène et/ou de méthane dégagés lors de l'échauffement du réducteur carboné. Les cinétiques de réaction de ces réactions sont plus favorables que celles du monoxyde de carbone à des températures inférieures à 900°C. Les constituants volatils précités sont libérés progressivement et entrent en contact avec les oxydes métalliques déposés sur la sole du four, dans des conditions opératoires telles, en particulier en ce qui concerne la température de réaction, qu'ils participent à la réduction de ceux-ci.

Les oxydes métalliques et les gaz réducteurs libérés entrent en contact à des températures aussi élevées que possible, sans cependant perturber le déroulement du processus de réduction. Le réducteur carboné est de préférence préchauffé à une température jusqu'à 200 °C tandis que les oxydes métalliques sont de préférence préchauffés à une température allant jusqu'à 850 °C.

Le préchauffage des deux constituants se fait de préférence au moyen de la chaleur récupérée des gaz de combustion évacués du four dans des échangeurs thermiques.

Ces conditions opératoires conduisent à une augmentation de la capacité de production par unité de surface et à une réduction de la quantité de dioxyde de carbone rejetée dans l'atmosphère par quantité unitaire d'oxydes métalliques réduits obtenue.

Ce procédé a également comme avantage d'évacuer moins de poussières hors du four grâce à un contrôle de la vitesse de ces gaz tout en maintenant minimal le volume du four. L'éponge métallique obtenue présente une meilleure homogénéité du degré de réduction dans la masse que les produits résultant des techniques connues.

On utilise, de préférence, un excès d'au moins 10% en réducteur carboné, cet excès étant défini par rapport à la quantité théorique nécessaire pour la réduction des oxydes.

Selon un mode de réalisation particulier, on propose un procédé de réduction directe d'oxydes métalliques dans un four à sole tournante, dans lequel l'on dépose sur une partie dite d'enfournement de la sole sur une certaine largeur de la couronne, qui dépend du diamètre et de la capacité du four, une charge comprenant plusieurs couches. Ces couches peuvent être déposées simultanément ou successivement.

La teneur en oxydes métalliques et en réducteur carboné des couches peut être différente. De préférence, la teneur en oxydes métalliques des couches supérieures est supérieure à la teneur en oxydes métalliques des couches inférieures. Les couches inférieures contiennent par conséquent un excès en réducteur carboné. La teneur en réducteur carboné des couches supérieures est par conséquent inférieure à celle des couches inférieures. Dans un tel cas, il existe une sorte de gradient de concentration en oxydes métalliques, concentration qui augmente de la sole en direction de la surface supérieure de la charge. Une quantité plus importante de constituants volatils est donc libérée dans les couches profondes et ces gaz diffusent à travers les couches vers la surface supérieure de la charge où ces. constituants volatils rencontrent une plus forte concentration en oxydes métalliques. Comme la température des couches inférieures est moins élevée que la température des couches supérieures, les constituants volatils du réducteur carboné sont libérés progressivement dans les couches inférieures et rencontrent lors de leur diffusion vers la surface supérieure des oxydes métalliques très chauds. En effet, les couches supérieures sont plus chaudes que les couches inférieures, d'une part parce que ces couches supérieures contiennent une plus forte concentration en oxydes métalliques préchauffés à des températures plus élevées que le réducteur carboné et d'autre part parce que ces couches sont en contact avec l'atmosphère du four. Les constituants volatils participent donc plus efficacement à la réduction des oxydes métalliques.

Avantageusement, la teneur en réducteur carboné de la couche inférieure est comprise entre la teneur théorique nécessaire pour la réduction complète des oxydes métalliques et une teneur de 100% en poids. de manière préférée entre 30% et 70% en poids et de manière particulièrement préférée entre 35% et 60% en poids.

La teneur en réducteur carboné de la couche supérieure est préférentiellement inférieure à 25 % en poids et de manière particulièrement préférée est inférieure à 16% en poids.

Selon un mode de réalisation avantageux, la charge est chauffée à l'intérieur du four jusqu'à une température de 900 - 1250 °C et de préférence de 1050 à 1150°C.

Il est intéressant de mettre en oeuvre les oxydes métalliques à une température d'alimentation aussi élevée que possible tout en évitant l'agglomération des oxydes métalliques.

Avantageusement, le mélange de réducteur carboné et d'oxydes métalliques respectivement la charge est retourné(e) et mélangé(e) progressivement pendant son séjour à l'intérieur du four.

Selon un autre mode de réalisation préféré, on forme à la surface de la charge une surface profilée en formant des sillons respectivement des monticules pour favoriser l'échange thermique entre la partie supérieure du four et la charge par une augmentation de l'efficacité du rayonnement du four et par une augmentation de la surface d'échange thermique avec l'atmosphère du four.

La pente des sillons respectivement des monticules est comprise habituellement entre 40° et 65°.

De préférence, on crée à la surface de la charge une surface en dents de scie.

Selon un mode de réalisation préféré, la charge, respectivement le mélange est chargé(e) sur une partie intérieure de la sole en forme de couronne et est transféré(e) en un mouvement substantiellement hélicoïdal vers la partie extérieure de la sole et après réaction, il (elle) est évacué(e) par la partie externe de la couronne.

Le mélange est généralement évacué après quatre tours ou plus.

La (les) couche(s) de mélange de réducteur carboné et d'oxydes métalliques est (sont) déposée(s) de préférence sur une partie correspondant à 1/4 ou moins de la largeur de la couronne.

Lors de son séjour à l'intérieur du four, la densité apparente ou densité en vrac de la charge diminue c.-à-d. que son volume augmente. Les propriétés d'écoulement de la charge varient et notamment l'angle de déversement ou l'angle de talus augmente, c.-à-d. que la pente des monticules respectivement des sillons peut être de plus en plus raide au fur et à mesure de la progression de la charge à l'intérieur du four à sole tournante.

Comme la charge est transportée, selon un mode de réalisation préféré, de la partie centrale de la sole tournante vers la partie extérieure, la largeur qu'occupe la bande varie progressivement au cours du procédé. L'augmentation en volume apparente de la charge au cours du procédé est compensée dans une large mesure par une augmentation de la pente de la surface en dent de scie et de la largeur de la bande.

Une postcombustion des gaz libérés lors de la réduction est réalisée de préférence dans la partie intérieure de la couronne du four.

Avantageusement, l'évacuation des gaz et le déplacement de la charge à l'intérieur du four se font radialement à contre-courant.

Le préchauffage du réducteur et des oxydes métalliques se fait communément au moyen de la chaleur récupérée des gaz de combustion et des gaz de post combustion.

Il est apparu avantageux de mélanger de la chaux aux oxydes métalliques et/ou au réducteur carboné, celle-ci d'une part réagissant comme catalyseur de la réaction et d'autre part évitant des phénomènes d'adhérence des éponges métalliques. De plus, la chaux contribue généralement à la désulfuration de la fonte et à la formation d'un laitier ou de scories plus fluides.

Dans une application particulière, la couche du mélange oxydes métalliques / réducteur carboné est constituée par une couche de pellets incluant ces constituants.

Le terme "oxydes métalliques" englobe aussi bien les minerais de métaux, en particulier le minerai de fer, que les oxydes métalliques à recycler provenant de la sidérurgie et de la fonderie, par exemple des hauts-fourneaux, des aciéries, des fours électriques ou des laminoirs, qu'un mélange de ces sources d'oxydes avec des fines de coke ou avec du charbon, le cas échéant sous forme de pellets.

On entend par réducteur carboné toute matière carbonée à l'état solide ou liquide tel que p.ex. le charbon, la lignite et les dérivés du pétrole. En principe, l'agent réducteur est du charbon avec une teneur en constituants volatils aussi élevée que possible dans le cadre du procédé, de préférence avec une teneur supérieure à 15% en constituants volatils.

Selon un autre aspect de l'invention, on propose également un four à sole tournante pour la réduction d'oxydes métalliques comprenant une sole tournante en forme de couronne subdivisée en :
- une zone d'enfournement,
- au moins une zone intermédiaire adjacente à la zone d'enfournement,
- une zone de déchargement adjacente à la zone intermédiaire
   la zone d'enfoumement comprenant un dispositif pour déposer sur une bande de la sole tournante une charge comprenant une ou plusieurs couches d'un mélange d'oxydes métalliques et d'un réducteur,
   la zone intermédiaire ainsi qu'éventuellement la zone d'enfoumement du four comprenant un dispositif permettant de réaliser un brassage progressif d'une partie supérieure et d'une partie sous-jacente de la charge tout en déplaçant la charge radialement au fur et à mesure de la rotation de la sole,
   la zone de déchargement comprenant un dispositif de déchargement permettant d'évacuer la charge métallisée en un ou plusieurs points de déchargement.

Le four comprend un dispositif créant à la surface de la couche déposée des sillons ou des monticules de façon à obtenir une surface essentiellement en dents de scie.

Le dispositif pour déposer une ou plusieurs couches d'un mélange d'oxydes métalliques et d'un réducteur comprend éventuellement un appareil pour mélanger à chaud le réducteur carboné et les oxydes métalliques avant, après ou pendant le dépôt des couches.

Selon un mode d'exécution particulier, le dispositif de déchargement comprend une vis sans fin ou un déflecteur. Dans le cas où l'on utilise un déflecteur pour effectuer le déchargement du four, la largeur de la couronne du four peut être plus importante que si l'on utilise une vis sans fin. En effet, vu les températures élevées régnant à l'intérieur du four, la vis sans fin au-delà d'une certaine longueur est mécaniquement trop chargée.

Le four comporte avantageusement un équipement permettant de réaliser le brassage qui comprend des râteaux pourvus de socs disposés à la manière des dents d'un râteau, lesdits râteaux étant fixes et disposés radialement dans le four.

Ces râteaux comprennent des socs pénétrant la couche en déplaçant le mélange radialement vers le côté d'évacuation de la couronne.

Les socs sont généralement décalés, c'est-à-dire disposés légèrement en quinconce par rapport aux sillons ou monticules formés par les socs du râteau précédent, de manière à enlever ou raboter un côté en pente de chaque sillon et former ainsi un nouveau sillon.

Selon un mode de réalisation préféré, des équipements permettent, par une première action, de faire tomber les sommets des dents de scie qui sont la partie la plus chaude des sillons dans le creux des sillons, et par une seconde action, de ramener une face de chaque dent de scie sur une face de la dent de scie adjacente de façon à recouvrir la matière amenée par la première action.

L'angle d'attaque des socs est préférablement compris entre 20° et 30° par rapport à la tangente des sillons. L'angle d'attaque des socs peut à tout moment être adapté pour inverser le sens de déplacement radiale de la charge et pour augmenter le temps de séjour de celle-ci à l'intérieur du four.

De manière préférée, les socs sont formés de manière à provoquer un retournement de la charge.

Le four comprend avantageusement des brûleurs installés dans des parois extérieures du four à sole mobile et/ou dans l'anneau extérieur de la voûte afin de maintenir le four à une température de l'ordre de 1200 à 1550°C, de préférence de l'ordre de 1400°C.

### Description d'une forme d'exécution préférée de l'invention

L'invention sera décrite plus en détail en référence à une forme d'exécution préférée de l'invention illustrée dans les dessins annexés.

La figure 1 représente une projection horizontale schématique d'un four rotatif avec une distribution des râteaux dans un four rotatif.

La figure 2 représente une projection verticale d'une coupe du four rotatif.

La figure 3 représente les sillons formés dès le chargement.

La figure 4 représente les sillons résultant de la première action des socs, disposés sur des râteaux fixes, dans la charge.

La figure 5 représente les sillons résultant de la seconde action des socs, disposés sur des râteaux fixes, dans la charge.

La figure 6 représente une vue schématique d'une projection verticale d'une section d'un râteau et d'un soc avec un bras de fixation au râteau.

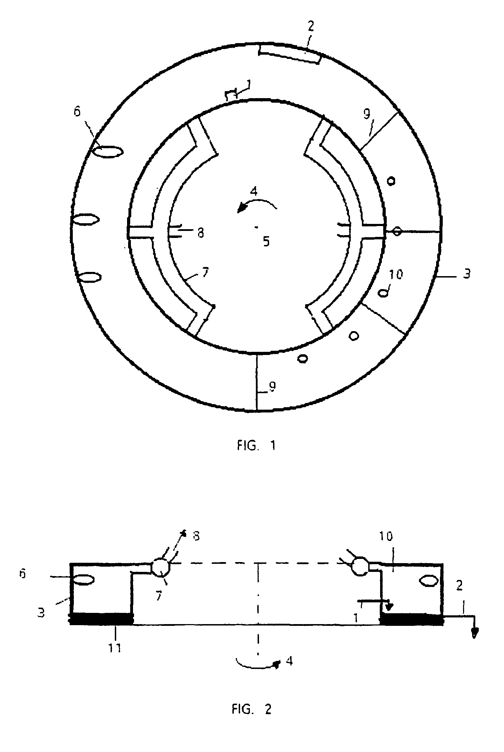

Le principe de fonctionnement du procédé est illustré à la figure 1.

Dans la figure 1, on illustre en 1 la zone de chargement et en 2 la zone d'évacuation de la sole tournante 3, celle-ci effectuant un mouvement dans le sens inverse des aiguilles d'une montre représenté par la flèche 4 autour de l'axe du four 5. Les brûleurs fixés dans la paroi extérieure du four sont représentés par 6, les gaz de combustion sont extraits par les parois intérieures du four en 7 et envoyés vers les échangeurs thermiques par 8. Les râteaux supportant les socs ont reçu le repère de référence 9 tandis que les injecteurs d'oxygène ont reçu le repère 10.

Dans la figure 2, on a utilisé les mêmes repères que dans la figure 1. Le repère 11 désigne la charge.

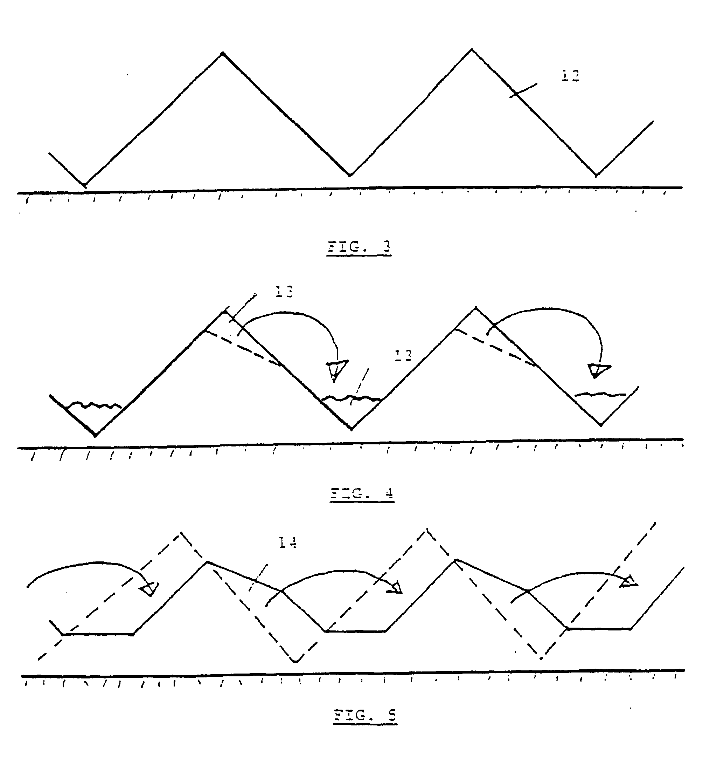

La figure 3 représente les sillons 12 avant le passage des socs.

La figure 4 représente le rabotage du sommet 13 des sillons, avant l'action des socs.

La figure 5 représente le rabotage 14 des sillons, résultant de la seconde action des socs.

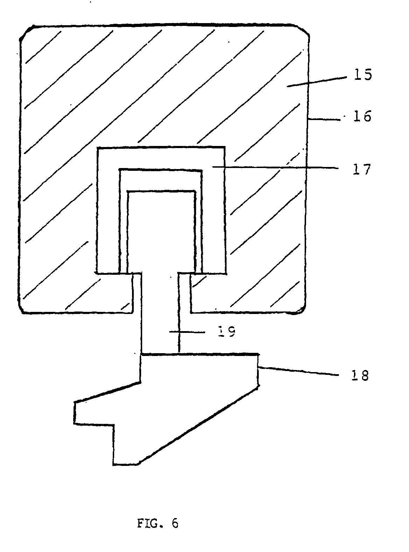

La figure 6 illustre une vue schématique d'une projection verticale d'une section d'un râteau 15 avec son isolation thermique extérieure 16 et une chambre de refroidissement intérieure à l'eau 17 ainsi qu'un soc 18 avec un bras de fixation au râteau 19.

L'action des socs à double action est explicitée plus en détail ci-dessous. L'entrée du four est pourvue d'un équipement créant à la surface de la charge des sillons à section triangulaires de façon à obtenir une surface en dents de scie. Dans la zone intermédiaire en prolongation de la zone d 'enfournement, le four comporte des équipements complémentaires à double action qui, par une première action font tomber le matériau constituant le sommet de chaque dent de scie dans le creux adjacent afin d'éviter que le matériau des sommets, qui sont très rapidement chauffés, n'atteigne la température d'agglomération et/ou de fusion, ce qui rendrait leur mélange à la charge et la réduction des oxydes métalliques plus difficile. Par une seconde action, on obtient qu'une face de chaque dent de scie et le cas échéant une partie de la base soit enlevée, la matière enlevée étant ramenée sur une face de la dent de scie adjacente et recouvrant la matière amenée par la première action. Par conséquent, la charge est mélangée progressivement à des niveaux de plus en plus bas et est déplacée radialement au fur et à mesure de la rotation de la sole, la base des dents de scie étant déplacée à la fin de chaque tour de la charge radialement en une ou plusieurs étapes d'une distance totale correspondant à la largeur de la zone de chargement.

Dans la seconde zone intermédiaire suivante, le four comporte des équipements à double action similaires, qui permettent, par une première action d'enlever les sommets des dents scie et de ramener cette partie dans le creux adjacent. Par une seconde action, on obtient qu'une face de chaque dent de scie soit enlevée jusqu'à la sole, la partie enlevée étant ramenée sur une face de la dent de scie adjacente en recouvrant la matière amenée par la première action. La charge est déplacée radialement au fur et à mesure de la rotation de la sole pour être évacuée après plusieurs tours, préférentiellement après 4 tours ou plus, vers la partie de la couronne opposée à la partie d'enfournement.

Bien entendu, les deux zones peuvent également comporter des équipements identiques.

Dans ces zones intermédiaires du four, les conditions opératoires sont choisies de manière à réaliser un compromis entre, d'une part, la nécessité de réaliser aussi vite que possible une température élevée et homogène de la charge et, d'autre part, la nécessité de ne mettre progressivement en contact avec la couche d'oxydes métalliques ou la couche supérieure du mélange oxydes métalliques / charbon que la partie supérieure de la couche sous-jacente en évitant d'y incorporer des couches inférieures plus froides, de façon à ce que la température du nouveau mélange formé ainsi obtenu soit supérieure à 600 °C, en particulier de l'ordre de 700 °C à 800°C.

La vitesse de rotation de la sole est choisie en fonction du diamètre du four. Elle peut être comprise entre 3 et 16 tours/heure et de préférence, elle est de 8 à 12 tours/heure.

La vitesse relative de la charge par rapport aux socs est de préférence comprise entre 10 et 50 cm/s et de manière avantageuse entre 15 et 30 cm/s.

D'autre part, pour ce qui concerne la couche supérieure de la charge, il faut éviter que celle-ci ne se vitrifie, par exemple par formation de silicates du type fayalite qui ont un effet d'inhibition de la réduction. A cet effet, des moyens tels que des râteaux assurent un mélange rapide de la couche de surface dans la couche immédiatement sous-jacente.

On vise à obtenir un temps d'élaboration aussi court que possible. Pour une épaisseur de la charge de l'ordre de 5 à 10 cm, le temps d'élaboration est déterminé par le point le plus froid de la charge, une éponge métallique présentant de meilleures caractéristiques d'homogénéité comparée aux éponges produites par les techniques de réduction de l'état de la technique, ces dernières présentant généralement l'inconvénient d'entraîner la production d'un produit avec des taux de réduction des oxydes métalliques variables.

Dans ce mode d'exécution préférée, on prévoit que
- l'enfournement se fasse dans le contour intérieur de la couronne, le petit cercle, de préférence sur 1/6 à 1/12 de la largeur de la couronne,
- la charge qui effectue 4 tours complets ou plus selon les conditions de chargement sur la largeur de la couronne, soit retournée jusqu'à 100 fois par des râteaux équipés de socs de formes et de fonctions différentes suivant la zone du four telles que décrites ci-dessus,
- à chaque soc, la charge soit déplacée radialement vers l'extérieur, la charge parcourant ainsi un chemin substantiellement hélicoïdal,
- le déchargement se fasse sur la partie extérieure de la couronne au moyen d'un ou de plusieurs déflecteurs d'une longueur correspondant respectivement à la largeur ou à une fraction de la largeur de chargement,
- des brûleurs soient disposés dans les parois latérales du four au-dessus du niveau de la sole, principalement dans les parois extérieures de la couronne, sur le grand cercle et/ou dans l'anneau extérieur de la voûte,
- l'évacuation des gaz se fasse à contre-courant du déplacement de la matière par les parois des côtés intérieurs de la couronne, sur le petit cercle.

Sur les râteaux, les socs à double action de dimensions et de formes différentes sont disposés de façon à ce que les socs de la première zone intermédiaire brassent progressivement la charge à des niveaux de plus en plus bas jusqu'à la sole tandis que les socs de la deuxième zone intermédiaire, où la charge n'est pas encore agglomérée et est encore facilement mélangeable, ont une forme appropriée différente de celle des premiers socs et brassent les sillons et leur base. On évite de cette manière l'apparition en surface de la charge d'une plaque d'oxydes métalliques réduits épaisse et résistante, difficile à morceler et difficile à évacuer.

Ces râteaux sont fixes et disposés radialement dans le four, le premier râteau étant disposé dans la première zone intermédiaire en prolongation de la zone d'enfournement, c'est-à-dire d'alimentation du four.

Les socs des râteaux sont fixes et décalés, c'est-à-dire disposés légèrement en biais par rapport aux sillons formés par les socs du râteau précédent, par exemple de 50 mm, de façon à enlever un côté en pente de chaque sillon ou dent de scie. Le mouvement de la matière sur la sole provoque un mélange (c'est-à-dire un brassage) et la formation d'un nouveau sillon ou dent de scie. Les socs créent sur toute la surface de la charge des sillons à section triangulaire qui augmentent de l'ordre de 20 à 65% la surface de la charge à l'interface avec l'atmosphère du four, réalisant de ce fait un plus grand transfert thermique du four vers la charge.

Les premier et second types de socs à double action sont conçus de telle sorte qu'à chaque passage de la charge, une partie de celle-ci soit retournée, la couche supérieure de la charge en contact avec l'atmosphère du four, au début constituée d'oxydes métalliques ensuite du mélange oxydes métalliques / charbon et finalement d'oxydes métalliques réduits, étant descendue tandis que la couche sous-jacente est remontée.

L'extrémité des socs est conformée de manière à provoquer un retournement de la matière de sorte que le manteau du sillon, partie la plus chaude, se retrouve au coeur de la base du nouveau sillon créé, afin d'assurer une meilleure homogénéisation.

Cette extrémité des socs peut être refroidie par une circulation interne d'un liquide réfrigérant par exemple.

La distribution des râteaux dans les différentes zones du four peut se faire de façon linéaire sur la longueur de passage dans une zone du four. Elle se fera de préférence de façon non linéaire et sera dépendante de la température de surface ainsi que du gradient de température dans la charge.

La quantité de réducteur carboné se détermine par la quantité stoechiométrique nécessaire pour provoquer la réduction complète des oxydes métalliques présents, diminuée d'une quantité correspondant à l'action réductrice des éléments volatils, et éventuellement majorée d'une quantité nécessaire à la fusion de l'éponge et à l'alliage ultérieur.

Le mélange progressif de la couche d'oxydes métalliques avec la couche sous-jacente dont la température est nécessairement plus élevée dans la zone proche de l'interface oxydes métalliques / charbon que dans les couches plus éloignées, se traduit par les conséquences suivantes :
- un plus grand transfert thermique par une augmentation de la surface à l'interface couche supérieure / atmosphère du four;
- la meilleure conductibilité thermique de la couche d'oxydes métalliques présents au début en une seule couche dans la partie supérieure de la charge et ensuite progressivement dans le mélange, contribue à un meilleur transfert thermique que celui des procédés à couches multiples, sans que l'agent réducteur, en l'occurrence le charbon, qui est moins bon conducteur thermique, ne perturbe ce processus ;
- le mélange progressif des couches constituant la charge permet la réalisation rapide d'une homogénéisation de la température de cette charge ;
- les oxydes métalliques atteignent très rapidement des températures élevées où leur réactivité est plus forte, ce qui augmente l'efficacité du processus de réduction et diminue la durée opératoire ;
- les constituants volatils libérés progressivement, générés par le charbon porté progressivement à plus haute température, sont utilisés de manière efficace et immédiate comme agent de réduction ;
- la réduction à l'aide d'hydrogène se produit immédiatement et est optimalisée, ce qui permet une cinétique réactionnelle plus forte que celle du gaz CO ;
- la réduction par le CO est rendue plus efficace du fait que la couche supérieure plus chaude est progressivement mélangée à la couche directement sous-jacente portée à la température adéquate et non aux couches plus profondes encore trop froides ;
- en principe, il devient possible de produire moins de dioxyde de carbone par masse unitaire de métal réduit produit ;
- les trop hautes températures en surface sont évitées, et de la sorte, il n'y a pas production de fayalite ;
- on évite l'apparition en surface de la charge d'une plaque d'oxydes métalliques réduits trop épaisse, résistante, difficile à morceler et difficile à évacuer ;
- le four, pour une production identique, sera moins volumineux que celui des autres procédés utilisant des fours à sole tournante.

Le four est généralement maintenu à une température de coupole de l'ordre de 1300 à 1450 °C, de préférence de l'ordre de 1400 °C, par des brûleurs installés dans les parois extérieures du four à sole mobile et/ou dans l'anneau extérieur de la voûte et avec postcombustion dans la partie côté intérieur de la couronne.

Les mélanges successifs des couches supérieures aux couches sous-jacentes ont pour conséquence que la température maximale atteinte ne dépasse pas 1100 à 1200 °C en surface.

Les techniques employées permettent également d'augmenter l'homogénéisation des charges constituées de pellets, ce qui contribue à une augmentation considérable de l'épaisseur de la charge, à un déroulement opératoire plus rapide et plus efficace, à un encombrement plus réduit du four et à une optimalisation des échanges thermiques.

## Revendications

1. Procédé de réduction d'oxydes métalliques dans un four à sole tournante (3) en forme de couronne, dans lequel un réducteur carboné et des oxydes métalliques sont déposés en une bande sur une partie de ladite sole tournante (3) et sont ensuite transportés en un mouvement substantiellement en forme hélicoïdale vers un dispositif d'évacuation, le réducteur étant préchauffé et mélangé avec les oxydes métalliques préchauffés avant qu'ils soient et/ou pendant qu'ils sont déposés sur la sole tournante (3), **caractérisé en ce qu'**on utilise dans une première phase de réduction les composantes volatiles du réducteur carboné (principalement le méthane et l'hydrogène) pour débuter la réduction des oxydes métalliques et **en ce qu'**on utilise, dans une deuxième étape de réduction, le monoxyde de carbone.

2. Procédé selon la revendication 1, **caractérisé en ce que** le réducteur carboné est préchauffé à une température jusqu'à 200 °C et/ou les oxydes métalliques sont préchauffés à une température allant jusqu'à 850 °C.

3. Procédé selon la revendication 1 ou 2, **caractérisé en ce que** le préchauffage du réducteur carboné et /ou des oxydes métalliques se fait au moyen de la chaleur récupérée de gaz de combustion.

4. Procédé selon l'une quelconque des revendications précédentes, **caractérisé en ce que** l'on dépose une charge (11) de réducteur carboné et d'oxydes métalliques comprenant une ou plusieurs couches superposées.

5. Procédé selon la revendication 5, **caractérisé en ce que** les couches superposées sont déposées successivement.

6. Procédé selon la revendication 5, **caractérisé en ce que** les couches superposées sont déposées en une fois.

7. Procédé selon l'une quelconque des revendications 4 à 6, **caractérisé en ce que** les couches comprennent des teneurs en oxydes métalliques et en réducteur carboné différentes.

8. Procédé selon la revendication 7, **caractérisé en ce que** la teneur en réducteur carboné de la couche supérieure est inférieure à 25 % en poids et de manière particulièrement préférée est inférieure à 16% en poids

9. Procédé selon la revendication 7 ou 8, **caractérisé en ce que** la teneur en réducteur carboné de la couche inférieure est comprise entre la teneur théorique nécessaire pour la réduction complète des oxydes métalliques et une teneur de 100% en poids, de manière préférée entre 30% et 70% en poids et de manière particulièrement préférée entre 35% et 60% en poids.

10. Procédé selon l'une quelconque des revendications précédentes, **caractérisé en ce que** le mélange est chauffé à l'intérieur du four jusqu'à une température de 950 - 1250 °C et de préférence de 1050 à 1150°C.

11. Procédé selon l'une quelconque des revendications précédentes, **caractérisé en ce que** l'on met en oeuvre les oxydes métalliques à une température d'alimentation aussi élevée que possible tout en évitant l'agglomération des oxydes métalliques.

12. Procédé selon l'une quelconque des revendications précédentes, **caractérisé en ce que** la (les) couche(s) de réducteur carboné et d'oxydes métalliques est (sont) retournée(s) et mélangée(s) progressivement pendant son (leur) séjour à l'intérieur du four.

13. Procédé selon l'une quelconque des revendications précédentes, **caractérisé en ce que** l'on forme à la surface du mélange d'oxydes métalliques et de réducteur carboné une surface profilée en formant des sillons (12) respectivement des monticules.

14. Procédé selon la revendication 13, **caractérisé en ce que** la pente des sillons (12) respectivement des monticules est comprise entre 20° et 65°.

15. Procédé selon la revendication 13, **caractérisé en ce que** l'on crée à la surface du mélange d'oxydes métalliques et de réducteur carboné une surface substantiellement en dents de scie.

16. Procédé selon la revendication 14, **caractérisé en ce que** la largeur de la bande de chargement et l'angle de la pente des sillons (12) respectivement des monticules sont variés pendant le séjour de la charge dans le four.

17. Procédé selon l'une quelconque des revendications précédentes, **caractérisé en ce que** le mélange est chargé sur une partie intérieure de la sole (3) en forme de couronne, **en ce qu'**il est transféré en un mouvement substantiellement hélicoïdal vers la partie extérieure de la sole et **en ce qu'**après réaction, il est évacué par la partie externe de la couronne.

18. Procédé selon l'une quelconque des revendications précédentes, **caractérisé en ce que** le mélange est évacué après quatre tours ou plus.

19. Procédé selon l'une quelconque des revendications précédentes, **caractérisé en ce que** la (les) couche(s) de mélange de réducteur solide et d'oxydes métalliques est (sont) déposée(s) sur une partie correspondant au maximum à 1/4 de la largeur de la couronne.

20. Procédé selon l'une quelconque des revendications précédentes, **caractérisé en ce qu'**une postcombustion des gaz est réalisée dans une partie intérieure de la couronne.

21. Procédé selon l'une quelconque des revendications précédentes, **caractérisé en ce que** l'évacuation des gaz et le déplacement de la charge se fait radialement à contre-courant.

22. Procédé selon l'une quelconque des revendications précédentes, **caractérisé en ce que** le réducteur carboné et/ou les oxydes métalliques comprennent de la chaux.

23. Four à sole tournante pour la réduction d'oxydes métalliques comprenant une sole tournante (3) en forme de couronne subdivisée en :
• une zone d'enfournement,
• au moins une zone intermédiaire adjacente à la zone d'enfournement,
• une zone de déchargement adjacente à la zone intermédiaire
la zone d'enfournement comprenant un dispositif pour déposer sur une bande de la sole tournante une charge (11) comprenant une ou plusieurs couches d'un mélange d'oxydes métalliques et d'un réducteur,
la zone intermédiaire ainsi qu'éventuellement la zone d'enfournement du four comprenant un dispositif permettant de réaliser un brassage progressif d'une partie supérieure et d'une partie sous-jacente de la charge (11) tout en déplaçant la charge radialement au fur et à mesure de la rotation de la sole,
la zone de déchargement comprenant un dispositif de déchargement permettant d'évacuer la charge (11) métallisée en un ou plusieurs points de déchargement
**caractérisé en ce que** le four comprend un dispositif créant à la surface de la charge (11) déposée des sillons (12) ou des monticules de façon à obtenir une surface essentiellement en dents de scie.

24. Four selon la revendication 23, **caractérisé en ce que** le dispositif pour déposer une ou plusieurs couches d'un mélange d'oxydes métalliques et d'un réducteur comprend un appareil pour mélanger à chaud le réducteur carboné et les oxydes métalliques avant, après ou pendant le dépôt des couches.

25. Four selon l'une quelconque des revendications 23 à 24, **caractérisé en ce que** le dispositif de déchargement comprend une vis sans fin ou un déflecteur.

26. Four selon la revendication 25, **caractérisé en ce que** le déflecteur est fixe ou à pénétration réglable.

27. Four selon la revendication 24 à 26, **caractérisé en ce qu'**il comporte un équipement permettant de réaliser le brassage qui comprend des râteaux (9, 15) pourvus de socs à double action disposés à la manière des dents d'un râteau, lesdits râteaux (9, 15) étant fixes et disposés radialement dans le four.

28. Four selon la revendication 27, **caractérisé en ce que** les râteaux (9, 15) et les socs (18) sont refroidis.

29. Four selon la revendication 27 ou 28, **caractérisé en ce que** les râteaux (9, 15) comprennent des socs (18) pénétrant la couche en déplaçant le mélange radialement vers le côté d'évacuation de la couronne et/ou des socs pénétrant la couche sur toute sa profondeur en déplaçant le mélange radialement vers le côté d'évacuation de la couronne.

30. Four selon l'une quelconque des revendications 27 à 29, **caractérisé en ce que** les socs (18) sont décalés, c'est-à-dire disposés légèrement en biais par rapport aux sillons (12) ou monticules formés par les socs (18) du râteau (9, 15) précédent, de manière à enlever un côté en pente de chaque sillon (12) et former ainsi un nouveau sillon (12), **en ce que** des équipements permettent, par une première action, de faire tomber les sommets des dents de scie dans le creux des sillons (12) et, par une seconde action, de ramener une face de chaque dent de scie sur une face de la dent de scie adjacente de façon à recouvrir la matière amenée par la première action.

31. Four selon l'une quelconque des revendications 27 à 30, **caractérisé en ce que** les socs (18) comprennent un angle d'attaque par rapport à la tangente des sillons (12) qui est compris entre 20 et 30°.

32. Four selon la revendication 31, **caractérisé en ce que** l'angle d'attaque des socs (18) est adaptable à tout moment.

33. Four selon l'une quelconque des revendications 23 à 32, **caractérisé en ce que** les socs (18) sont formés de manière à provoquer un retournement et/ou un brassage de la charge (11).

34. Four selon l'une quelconque des revendications 27 à 33, **caractérisé en ce que** la vitesse relative de la charge (11) par rapport aux socs (18) est comprise entre 10 et 50 cm/s et de manière préférée entre 15 et 30 cm/s.

35. Four selon l'une quelconque des revendications 23 à 34, **caractérisé en ce que** le four comprend des brûleurs (6) installés dans des parois extérieures du four à sole mobile et/ou dans un anneau extérieur de la voûte afin de maintenir le four à une température de l'ordre de 1200 à 1550°C, de préférence de l'ordre de 1400°C.

## Patentansprüche

1. Verfahren zur Reduktion von Metalloxiden in einem kranzförmigen Drehherdofen (3), bei dem ein kohlenstoffhaltiges Reduktionsmittel und Metalloxide in einem Band auf einen Teil des Drehherdes (3) aufgetragen werden und dann in einer im Wesentlichen spiralförmigen Bewegung zu einer Austragsvorrichtung gefördert werden; wobei das Reduktionsmittel vorgewärmt und mit den vorgewärmten Metalloxiden, bevor und/oder während sie auf den Drehherd (3) aufgetragen werden, gemischt wird, **dadurch gekennzeichnet, dass** in einem ersten Reduktionsschritt die flüchtigen Bestandteile des kohlenstoffhaltigen Reduktionsmittels (hauptsächlich Methan und Wasserstoff) genutzt werden, um die Reduktion der Metalloxide in Gang zu setzen, und in einem zweiten Reduktionsschritt Kohlenmonoxid genutzt wird.

2. Verfahren nach Anspruch 1, **dadurch gekennzeichnet, dass** das kohlenstoffhaltige Reduktionsmittel auf eine Temperatur von bis zu 200°C vorgewärmt wird und/oder die Metalloxide auf eine Temperatur von bis zu 850°C vorgewärmt werden.

3. Verfahren nach Anspruch 1 oder 2, **dadurch gekennzeichnet, dass** das Vorwärmen des kohlenstoffhaltigen Reduktionsmittels und/oder der Metalloxide durch Nutzung der Abgaswärme erfolgt.

4. Verfahren nach einem der vorhergehenden Ansprüche, **dadurch gekennzeichnet, dass** eine Schmelze (11) aus kohlenstoffhaltigem Reduktionsmittel und Metalloxiden aufgetragen wird, die eine oder mehrere übereinanderliegende Schichten umfasst.

5. Verfahren nach Anspruch 5, **dadurch gekennzeichnet, dass** die übereinanderliegenden Schichten nacheinander aufgetragen werden.

6. Verfahren nach Anspruch 5, **dadurch gekennzeichnet, dass** die übereinanderliegenden Schichten auf einmal aufgetragen werden.

7. Verfahren nach einem der Ansprüche 4 bis 6, **dadurch gekennzeichnet, dass** die Schichten unterschiedliche Gehalte an Metalloxiden und kohlenstoffhaltigem Reduktionsmittel aufweisen.

8. Verfahren nach Anspruch 7, **dadurch gekennzeichnet, dass** der Gehalt an kohlenstoffhaltigem Reduktionsmittel der oberen Schicht weniger als 25 Masse-% und besonders bevorzugt weniger als 16 Masse-% beträgt.

9. Verfahren nach Anspruch 7 oder 8, **dadurch gekennzeichnet, dass** der Gehalt an kohlenstoffhaltigem Reduktionsmittel der unteren Schicht zwischen dem für die vollständige Reduktion der Metalloxide notwendigen theoretischen Gehalt und einem Gehalt von 100 Masse-% liegt, bevorzugt zwischen 30 und 70 Masse-% und besonders bevorzugt zwischen 35 und 60 Masse-%.

10. Verfahren nach einem der vorhergehenden Ansprüche, **dadurch gekennzeichnet, dass** das Gemisch im Innern des Ofens bis auf eine Temperatur von 950 bis 1250°C und vorzugsweise 1050 bis 1150°C erhitzt wird.

11. Verfahren nach einem der vorhergehenden Ansprüche, **dadurch gekennzeichnet, dass** die Metalloxide bei maximaler Versorgungstemperatur verarbeitet werden und dabei gleichzeitig das Zusammenballen der Metalloxide vermieden wird.

12. Verfahren nach einem der vorhergehenden Ansprüche, **dadurch gekennzeichnet, dass** die Schicht(en) aus kohlenstoffhaltigem Reduktionsmittel und Metalloxiden während ihres Aufenthalts im Innern des Ofens nach und nach gewendet und gemischt wird (werden).

13. Verfahren nach einem der vorhergehenden Ansprüche, **dadurch gekennzeichnet, dass** an der Oberfläche des Gemischs aus Metalloxiden und kohlenstoffhaltigem Reduktionsmittel durch Bildung von Rinnen (12) bzw. Erhebungen eine profilierte Fläche ausgebildet wird.

14. Verfahren nach Anspruch 13, **dadurch gekennzeichnet, dass** die Neigung der Rinnen (12) bzw. Erhebungen 20 bis 65° beträgt.

15. Verfahren nach Anspruch 13, **dadurch gekennzeichnet, dass** an der Oberfläche des Gemischs aus Metalloxiden und kohlenstoffhaltigem Reduktionsmittel eine im Wesentlichen sägezahnförmige Fläche ausgebildet wird.

16. Verfahren nach Anspruch 14, **dadurch gekennzeichnet, dass** die Breite des Beschickungsbandes und der Neigungswinkel der Rinnen (12) bzw. Erhebungen während des Aufenthalts der Schmelze im Ofen verändert werden.

17. Verfahren nach einem der vorhergehenden Ansprüche, **dadurch gekennzeichnet, dass** das Gemisch auf einen inneren Teil des kranzförmigen Herdes (3) aufgegeben wird, in einer im Wesentlichen spiralförmigen Bewegung zum äußeren Teil des Herdes gefördert wird und nach erfolgter Reaktion am äußeren Teil des Kranzes ausgetragen wird.

18. Verfahren nach einem der vorhergehenden Ansprüche, **dadurch gekennzeichnet, dass** das Gemisch nach vier Umdrehungen oder mehr ausgetragen wird.

19. Verfahren nach einem der vorhergehenden Ansprüche, **dadurch gekennzeichnet, dass** die Schicht(en) aus dem Gemisch aus festem Reduktionsmittel und Metalloxiden auf einen Teil aufgetragen wird, der höchstens einem Viertel der Breite des Kranzes entspricht.

20. Verfahren nach einem der vorhergehenden Ansprüche, **dadurch gekennzeichnet, dass** eine Nachverbrennung der Gase in einem inneren Teil des Kranzes durchgeführt wird.

21. Verfahren nach einem der vorhergehenden Ansprüche, **dadurch gekennzeichnet, dass** die Abführung der Gase und die Bewegung der Schmelze radial im Gegenstrom erfolgt.

22. Verfahren nach einem der vorhergehenden Ansprüche, **dadurch gekennzeichnet, dass** das kohlenstoffhaltige Reduktionsmittel und/oder die Metalloxide Kalk enthalten.

23. Drehherdofen zur Reduktion von Metalloxiden mit einem kranzförmigen Drehherd (3), welcher unterteilt ist in:
• eine Beschickungszone,
• mindestens eine an die Beschickungszone angrenzende Zwischenzone,
• eine an die Zwischenzone angrenzende Entladezone,
wobei die Beschickungszone eine Vorrichtung zum Auftragen einer Schmelze (11) aus einer oder mehreren Schichten eines Gemischs aus Metalloxiden und Reduktionsmittel auf ein Band des Drehherdes aufweist,
wobei die Zwischenzone sowie eventuell die Beschickungszone des Ofens eine Vorrichtung aufweist, mit der ein schrittweises Durchmischen eines oberen Teils und eines darunter liegenden Teils der Schmelze (11) erfolgen kann und die Schmelze dabei in radialer Richtung je nach Rotation des Herdes bewegt wird,
wobei die Entladungszone eine Entladevorrichtung aufweist, mit der die Metallschmelze (11) an einem oder mehreren Entladepunkten ausgetragen werden kann,
**dadurch gekennzeichnet, dass** der Ofen eine Vorrichtung enthält, die an der Oberfläche der aufgetragenen Schmelze (11) Rinnen (12) oder Erhebungen erzeugt, so dass eine im Wesentlichen sägezahnförmige Fläche entsteht.

24. Ofen nach Anspruch 23, **dadurch gekennzeichnet, dass** die Vorrichtung zum Auftragen einer oder mehrerer Schichten eines Gemischs aus Metalloxiden und Reduktionsmittel ein Gerät aufweist, um das kohlenstoffhaltige Reduktionsmittel und die Metalloxide vor, nach oder während des Auftragens der Schichten warm zu vermischen.

25. Ofen nach einem der Ansprüche 23 bis 24, **dadurch gekennzeichnet, dass** die Entladevorrichtung eine Förderschnecke oder einen Ablenker aufweist.

26. Ofen nach Anspruch 25, **dadurch gekennzeichnet, dass** der Ablenker feststehend ist oder ein regulierbares Durchdringungsvermögen aufweist.

27. Ofen nach Anspruch 24 bis 26, **dadurch gekennzeichnet, dass** er eine Einrichtung zum Durchmischen umfasst, die Rührarme (9, 15) mit Doppeleffektzinken aufweist, welche wie die Zähne eines Rechens angeordnet sind, wobei die Rührarme (9, 15) feststehend sind und radial im Ofen angeordnet sind.

28. Ofen nach Anspruch 27, **dadurch gekennzeichnet, dass** die Rührarme (9, 15) und die Zinken (18) gekühlt sind.

29. Ofen nach Anspruch 27 oder 28, **dadurch gekennzeichnet, dass** die Rührarme (9, 15) Zinken (18) aufweisen, die die Schicht durchdringen und das Gemisch dabei radial zur Austragsseite des Kranzes bewegen und/oder Zinken aufweisen, die die Schicht auf ihrer ganzen Tiefe durchdringen und das Gemisch dabei radial zur Austragsseite des Kranzes bewegen.

30. Ofen nach einem der Ansprüche 27 bis 29, **dadurch gekennzeichnet, dass** die Zinken (18) versetzt sind, d.h. leicht schräg zu den durch die Zinken (18) des vorangehenden Rührarms (9,15) gebildeten Rinnen (12) bzw. Erhebungen angeordnet sind, so dass eine schräge Seite jeder Rinne (12) entfernt wird und dadurch eine neue Rinne (12) entsteht, und dass Einrichtungen es ermöglichen, dass in einem ersten Schritt die Spitzen der Sägezähne in die Vertiefung der Rinnen (12) fallen und in einem zweiten Schritt eine Seite jedes Sägezahns zu einer Seite des benachbarten Sägezahns geführt wird, so dass das durch den ersten Schritt zugeführte Material bedeckt wird.

31. Ofen nach einem der Ansprüche 27 bis 30, **dadurch gekennzeichnet, dass** die Zinken (18) einen Eingriffswinkel in Bezug auf die Tangente der Rinnen (12) aufweisen, der 20 bis 30° beträgt.

32. Ofen nach Anspruch 31, **dadurch gekennzeichnet, dass** der Eingriffswinkel der Zinken (18) jederzeit angepasst werden kann.

33. Ofen nach einem der Ansprüche 23 bis 32, **dadurch gekennzeichnet, dass** die Zinken (18) so ausgebildet sind, dass sie ein Wenden und/oder ein Durchmischen der Schmelze (11) bewirken.

34. Ofen nach einem der Ansprüche 27 bis 33, **dadurch gekennzeichnet, dass** die Relativgeschwindigkeit der Schmelze (11) in Bezug auf die Zinken (18) 10 bis 50 cm/s und bevorzugt 15 bis 30 cm/s beträgt.

35. Ofen nach einem der Ansprüche 23 bis 34, **dadurch gekennzeichnet, dass** der Ofen in Außenwänden des Drehherdofens und/oder in einem äußeren Gewölbering angeordnete Brenner (6) aufweist, um den Ofen auf einer Temperatur von etwa 1200 bis 1550°C, vorzugsweise etwa 1400°C zu halten.

## Claims

1. Method for the reduction of metallic oxides in a furnace with a ring-shaped rotating hearth (3) in which a carbonaceous reducing agent and metallic oxides are deposited in a strip on a part of the said rotating hearth (3) and are then transported in a roughly helical movement to a discharge device, the reducing agent being preheated and mixed with the preheated metallic oxides before and/or during their deposition on the rotating hearth (3), **characterized in that**, in a first reducing stage, the volatile components of the carbonaceous reducing agent (mainly methane and hydrogen) are used to initiate the reduction of the metallic oxides and **in that**, in a second reducing stage, carbon monoxide is used.

2. Method according to Claim 1, **characterised in that** the carbonaceous reducing agent is preheated to a temperature up to 200°C and/or the metallic oxides are preheated to a temperature up to 850°C.

3. Method according to Claim 1 or 2, **characterised in that** the carbonaceous reducing agent and/or the metallic oxides are preheated by means of the heat recovered from the combustion gas.

4. Method according to any one of the preceding claims, **characterised in that** a charge (11) of carbonaceous reducing agent and metallic oxides comprising one or more superimposed layers is deposited.

5. Method according to Claim 5, **characterised in that** the superimposed layers are deposited successively.

6. Method according to Claim 5, **characterised in that** the superimposed layers are deposited simultaneously.

7. Method according to any one of Claims 4 to 6, **characterised in that** the layers comprise different concentrations of metallic oxides and carbonaceous reducing agent.

8. Method according to Claim 7, **characterised in that** the concentration of carbonaceous reducing agent in the upper layer is less than 25% by weight and, in particular, is preferably less than 16% by weight.

9. Method according to Claim 7 or 8, **characterised in that** the concentration of carbonaceous reducing agent in the lower layer lies between the theoretical concentration necessary for the complete reduction of the metallic oxides and a concentration of 100% by weight, preferably between 30% and 70% by weight and, in particular, preferably between 35% and 60% by weight.

10. Method according to any one of the preceding claims, **characterised in that** the mixture is heated inside the furnace up to a temperature of 950-1250°C and preferably 1050-1150°C.

11. Method according to any one of the preceding claims, **characterised in that** the metallic oxides are used at a feed temperature as high as possible while avoiding the agglomeration of the metallic oxides.

12. Method according to any one of the preceding claims, **characterised in that** the layer or layers of carbonaceous reducing agent and metallic oxides is/are turned over and progressively mixed during residence inside the furnace.

13. Method according to any one of the preceding claims, **characterised in that** the surface of the mixture of metallic oxides and carbonaceous reducing agent is shaped by forming furrows (12) or hummocks on it.

14. Method according to Claim 13, **characterised in that** the slope angle of the furrows (12) or hummocks lies between 20° and 65°.

15. Method according to Claim 13, **characterised in that** a roughly sawtooth-shaped surface is created on the surface of the mixture of metallic oxides and carbonaceous reducing agent.

16. Method according to Claim 14, **characterised in that** the width of the charging strip and the slope angle of the furrows (12) or hummocks vary during the residence of the charge in the furnace.

17. Method according to any one of the preceding claims, **characterised in that** the mixture is charged on to an inner part of the ring-shaped hearth (3), **in that** it is transferred in a roughly helical movement towards the outer part of the hearth, and **in that**, after the reaction, it is discharged through the outer part of the ring.

18. Method according to any one of the preceding claims, **characterised in that** the mixture is discharged after four or more revolutions.

19. Method according to any one of the preceding claims, **characterised in that** the layer or layers of the mixture of solid reducing agent and metallic oxides is/are deposited on a part corresponding at most to ¼ of the width of the ring.

20. Method according to any one of the preceding claims, **characterised in that** post-combustion of the gases is achieved in an inner part of the ring.

21. Method according to any one of the preceding claims, **characterised in that** the discharge of the gases and the movement of the charge take place radially in opposite directions.

22. Method according to any one of the preceding claims, **characterised in that** the carbonaceous reducing agent and/or the metallic oxides incorporate some lime.

23. Rotating-hearth furnace for the reduction of metallic oxides, comprising a ring-shaped rotating hearth (3) subdivided into:
• a charging zone,
• at least one intermediate zone adjacent to the charging zone,
• a discharge zone adjacent to the intermediate zone,
the charging zone comprising a device for depositing, on a strip of the rotating hearth, a charge (11) comprising one or more layers of a mixture of metallic oxides and a reducing agent,
the intermediate zone and possibly the charging zone of the furnace comprising a device for progressively stirring an upper part and an underlying part of the charge (11) while displacing the charge radially as the hearth rotates,
the discharge zone comprising a discharging device enabling the metallised charge (11) to be discharged at one or more discharge points,
**characterised in that** the furnace comprises a device for creating on the surface of the deposited charge (11) furrows (12) or hummocks, so as to obtain an essentially sawtooth-shaped surface.

24. Furnace according to Claim 23, **characterised in that** the device for depositing one or more layers of a mixture of metallic oxides and a reducing agent comprises an apparatus for mixing, while hot, the carbonaceous reducing agent and the metallic oxides before, after or during the deposition of the layers.

25. Furnace according to any one of Claims 23 to 24, **characterised in that** the discharge device comprises a worm conveyor or a deflector.

26. Furnace according to Claim 25, **characterised in that** the deflector is fixed or has an adjustable penetration.

27. Furnace according to Claim 24 to 26, **characterised in that** it comprises equipment for stirring comprising rabbles (9,15) provided with dual-action blades arranged like the teeth of a rabble, the said rabbles (9,15) being fixed and arranged radially in the furnace.

28. Furnace according to Claim 27, **characterised in that** the rabbles (9,15) and the blades (18) are cooled.

29. Furnace according to Claim 27 or 28, **characterised in that** the rabbles (9,15) comprise blades (18) penetrating the layer while displacing the mixture radially towards the discharge side of the ring and/or blades penetrating the layer over its whole depth while displacing the mixture radially towards the discharge side of the ring.

30. Furnace according to any one of Claims 27 to 29, **characterised in that** the blades (18) are offset, i.e. arranged in a slightly staggered fashion with respect to the furrows (12) or hummocks formed by the blades (18) of the preceding rabble (9,15), so as to remove one sloping side of each furrow (12) and thus form a new furrow (12), **in that** the equipment, by a first action, makes it possible to bring down the peaks of the saw teeth into the hollows of the furrows (12) and, by a second action, to take one face of each saw tooth on to a face of the adjacent saw tooth so as to cover the material brought by the first action.

31. Furnace according to any one of Claims 27 to 31, **characterised in that** the blades (18) comprise a working angle with respect to the tangent to the furrows (12) lying between 20° and 30°.

32. Furnace according to Claim 31, **characterised in that** the working angle of the blades (18) may be adapted at any time.

33. Furnace according to any one of Claims 23 to 32, **characterised in that** the blades (18) are shaped so as to turn the charge (11) over and/or to stir it.

34. Furnace according to any one of Claims 27 to 33, **characterised in that** the speed of the charge (11) relative to the blades (18) lies between 10 and 50 cm/s and preferably between 15 and 30 cm/s.

35. Furnace according to any one of Claims 23 to 34, **characterised in that** the furnace comprises burners (6) installed in the outer walls of the mobile-hearth furnace and/or in an outer ring of the roof in order to maintain the furnace at a temperature of the order of 1200 to 1550°C, preferably of the order of 1400°C.
